# EUROPEAN PATENT SPECIFICATION

(11) **EP 2 106 370 B1**
(45) Date of publication and mention of the grant of the patent: **04.05.2011**
(21) Application number: 06832356.7
(22) Date of filing: 13.12.2006
(51) Int. Cl.: B65D 41/34, B29C 43/32, B29C 45/00

(54) **PROCESS FOR MAKING PLASTIC CLOSURES**
VERFAHREN ZUR HERSTELLUNG VON KUNSTSTOFFVERSCHLÜSSEN
PROCÉDÉ DE FABRICATION DE CAPUCHONS EN PLASTIQUE

(43) Date of publication of application: 07.10.2009
(73) Proprietor: Bormioli Rocco & Figlio S.p.A., 43036 Fidenza (Parma) (IT)
(72) Inventor: MORINI Emilio, 43052 Colomo (Parma) (IT); AGNELLI, Pietro, 27055 Rivanazzano (Pavia) (IT)
(74) Representative: Colò, Chiara
(86) International application number: PCT/IT2006/000846
(87) International publication number: WO 2008/068787

(56) References cited:
- WO-A-98/20067
- GB-A- 2 185 244

## Description

### Technical Field

The invention relates to a process for making plastic closures and the capsule obtained with the process.

### Background Art

For closure of containers such as bottles for water, soft drinks and liquids in general, widespread use has been made for some time of closures which include, briefly, a cap which serves to open and re-close the container, and a device, generally a security strip, which allows verification of whether the container has already been opened; these closures, being used to close the necks of the containers having a circular perimeter, normally have a circular shape, at least in the lower part thereof destined to couple with the neck of the container. In particular reference is made to closures, of a generally known type, which are made in two parts, the first of which parts constitutes the cap with functions of opening and re-closing the container to which the closure is destined, and the second part thereof consisting in an annular element, among other things provided with a security strip which breaks on first opening of the closure, destined to constitute a connecting organ between the cap and the container. In some applications the second element exhibits a central zone (for example a disc, although it could be another element) which, during assembly of the closure detaches from the second element and is positioned in the first element (in the case of the disc, it detaches and is arranged internally of the cap, in the upper part thereof, where it constitutes a seal). These two elements are realised separately and are thereafter assembled before being inserted on the container; to enable a solid assembly between the two parts which constitute the closure, the cap is normally provided with an internal annular projection in which, during the assembly stage, an external annular projection exhibited by the second element inserts. Generally these closures include security strips which are connected to the second element by easy-break zones, with some ribs or zones however that are difficult to break; the security strips also include breakable zones which enable peripheral opening of the security ring on first opening of the container; this is to prevent a part of the closure, in particular the security ring, from completely detaching from the closure and remaining attached to the container. An example of such a closure is disclosed in GB 2 185 244.

To manufacture these closures, for some time now injection-moulding and compression-forming technologies have been used: the first includes injection of fluid-state material internally of dies where the material solidifies, while the second includes introducing a piece of plastic material internally of the bottom die of a die and subsequently deforming it by means of a punch which penetrates into the bottom die and forces the material to occupy all the space left between the bottom die and the punch, which space has, obviously, the same conformation as the desired capsule

The injection technology, which uses more complex and expensive dies, enables more complex closures to be formed. Compression technology has the advantage of using rather simple dies which can be inserted, for example, in rotary machines which comprise a large number of die-punch pairs, which are extremely fast and which render a very high productivity; compression-forming is also a more stable process which is easier to set up, and which also provides greater repeatability in the forming process.

As previously mentioned, both the moulding technologies and the previously-described closures have been known for a considerable time.

As the present moulding processes, in particular compression-forming, do not enable large undercuts to be produced, it can happen that the anchoring connection between the cap and the second element, which as mentioned is realised by a projection of the second element which inserts in the internal annular projection (which is an undercut) the cap is provided with, is not such as to prevent, on opening the container, a detachment of the second element from the cap; this means that the second element remains on the neck of the container. This fact, in particular in the case of glass containers, is irritating in a case where the container is destined for material recycling, but is extremely damaging in a case where the container, in particular a glass bottle, is destined for re-use. In order to be re-used, these containers are inserted in continuous machines which operate at very high speed and the functioning of which can be seriously compromised by a plastic ring still in place around the container neck.

A main aim of the present invention is to provide a process for making a closure, thanks to which it is impossible for a part of the closure to remain anchored to the container closed by the closure.

An advantage of the process of the invention is that it can also be applied to closures of known type, with no need to modify the dies used for the realisation thereof.

These aims and advantages and more besides are all attained by the invention as it is characterised in the appended claims.

### Disclosure of Invention

Further characteristics and advantages of the present invention will better emerge from the detailed description that follows of a possible actuation of the process, and a possible embodiment of the closure of the invention, illustrated purely by way of non-limiting example in the accompanying figures of the drawings, in which:

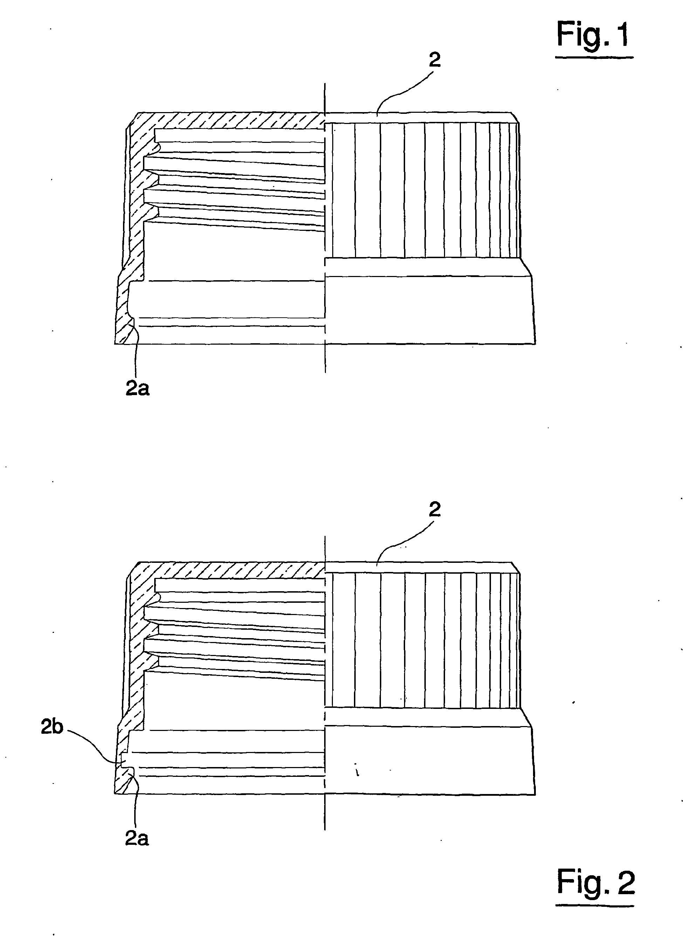

Figure 1 is a partially-sectioned view in an axial plane of a cap of a known-type closure;
Figure 2 is a partially-sectioned view in an axial plane of the cap of the closure made in the process of the invention;
Figure 3 shows, in an axial section, the annular element applicable both to known-type closures and to the closure made in the process of the invention;
Figure 4 is a detail in enlarged scale of the annular element inserted in the cap of a known-type closure;
Figure 5 is a detail in enlarged scale of the annular element inserted in the cap of the closure made in the process of the invention.

The process of the invention is for making closures 1 made of a plastic material, formed in at least two pieces. The closure is provided, as are many closures of known type, with a cap 2, which can be of various shapes, normally cylindrical or slightly truncoconical, and which can also be of various sizes, and which is destined to enable opening and re-closing of a container destined to receive the closure. The cap is provided with an internal annular projection 2a which is arranged in proximity of a lower open zone thereof. The closure further comprises an annular element 3, which is provided with a security element 4, frequently constituted by an annular strip connected to the annular element by means of easy-break zones; the annular element is further provided with an external annular projection 3a which, during the stage of assembly of the cap and the annular element, inserts above the internal annular projection 2a of the cap in order to provide an anchoring between the cap and the annular element. Sometimes, as occurs in some known closures, the annular element is provided in a central zone thereof, with an additional element which when the closure is assembled detaches from the second element and positions in the first element; merely by way of example, this additional element (not illustrated as not vital to the aims of this invention) can be a disc which, when the closure is assembled, detaches from the second element and positions itself in the internal upper part of the cap, there constituting a seal.

The invention provides, in particular, a process for making a closure of the type described herein above, which renders the anchoring between the cap and the annular element more solid with respect to known closures of this type.

The process comprises a first forming stage for realising the cap 2 and a second forming stage for realising the annular element 3.

The process further comprises, after the first cap-forming stage, a mechanical stage of working on the cap, which is aimed at realising, on the internal wall of the cap and in proximity of a lower zone thereof, an annular incision 2b which does not pass entirely through the plastic, and which is destined to receive, during the cap assembly stage with the annular element, at least a part of the external annular projection 3a of the annular element 3. This mechanical working stage is performed before the assembly stage, in which, as occurs with known-type capsules, the cap and annular element are assembled together in order to constitute the finished closure, ready for use in closing a container.

The mechanical working stage is realised with a cutting stage which is done using blades provided with a shaped cutting surface, which blades insert into the wall of the cap from inside and in the radial direction of the cap.

The mechanical working stage is performed in order that the zone of the cap in which the incision 2b is realised maintains a resistance to breakage which is superior to that of all the easy-break zones which connect the security element 4 to the annular element 3; therefore, in brief, the incision is not a through-incision and involves only a part of the thickness of the lateral wall of the cap, leaving, at the position of the incision, a residual thickness of the wall which is such as not to constitute an easy-break zone, i.e. not like the connection realised between the annular element and the security strip. This is obviously in order, during a first opening of the container, to prevent the closure from breaking at the position of the incision and not, as instead is desired, at the position of the easy-break ribs of the security device.

The stage of mechanical working of the cap is done after first heating the cap and preferably after heating the lower part of the cap in which the mechanical operation is to be performed. The heating is preferably done by gripping the lower part of the cap between a pair of jaws heating to a temperature comprised between 40°C and 60°C. The jaws, which are equipped on the apparatus performing the mechanical operation on the cap, apart from heating the cap also have the function of keeping it still during the mechanical operation.

This stage of heating makes the mechanical working easier to do.

During the mechanical working stage there is also an aspiration stage, performed with normal and known aspirating means, with which in the working zone the portions of cap (plastic shavings or pieces) detached from the cap during the work operation by the tools performing the mechanical operation are aspirated; this is so that, apart from avoiding obvious problems of cleanliness in the environment, is to prevent the shaved pieces of cap from obstructing the functioning of the machines carrying out the various operations.

With the described process caps are obtained which, apart from comprising the above-indicated element, also provide a cap having, in the internal wall thereof and in proximity of the lower zone thereof, an non-through annular incision 2b which is destined during the assembly stage of the cap with the annular element 3 to receive at least a part of the external annular projection 3a of the annular element 3. Further, in the caps of the invention the zone of the cap in which the incision 2b is made exhibits a resistance to breakage which is superior to the resistance of all the easy-break zones which connect the security element 4 to the annular element 3. The incision 2b is made in such a way that it is arranged superiorly of the internal annular projection 2a witch respect to the open lower zone of the cap.

During the cap assembly stage, the external annular projection 3a of the annular element 3 bends downwards during its interference with the internal annular projection 2a of the cap, and once in place is arranged above the projection.

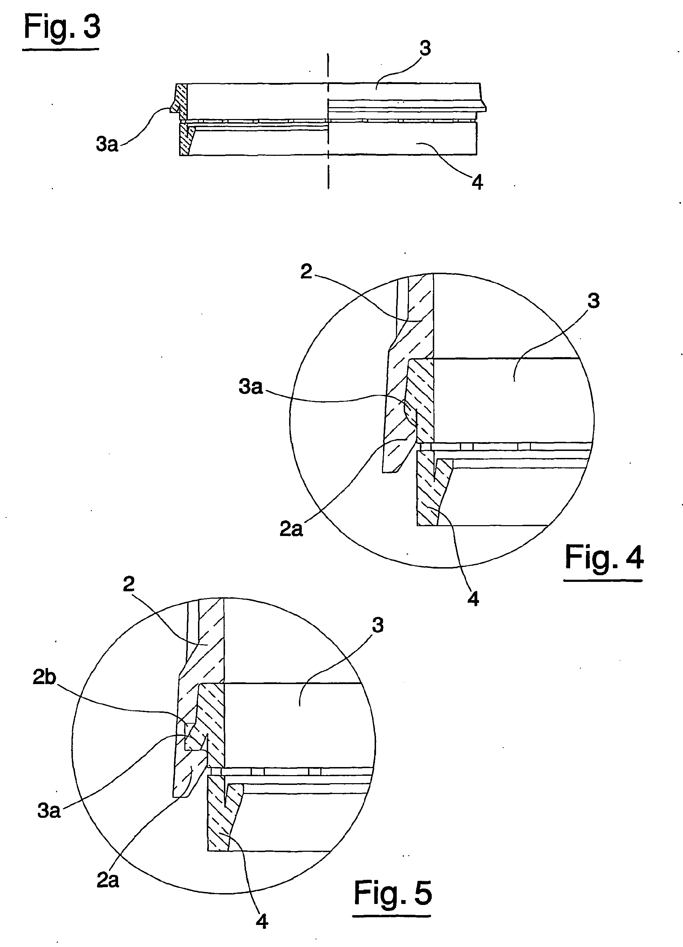

In known closures the external annular projection 3a of the annular element 3 is bent down and, following traction upon first opening of the closure, the external annular projection 3a can slide downwards until it overcomes the obstacle represented by the projection 2a and causes the detachment of the annular element 2 from the cap 3; this situation is illustrated in figure 4. The element 2 can therefore remain about the neck of the container when closed by the closure, creating the above-described drawbacks.

Differently to what happens with known closures, in the closure disclosed herein at least a part of the external annular projection 3a of the annular element 3 inserts internally of the incision 2b; thus any downwards-directed slippage of the projection 3a is prevented, and thus any possibility of detachment of the annular element 3 from the cap 2; this situation is illustrated in figure 5.

Both the external annular projection 3a and the incision 2b which have been described interest the whole perimeter of the elements to which they are applied, i.e. the projection and incision are continuous. This very much facilitates the assembly stage of the closure which is not constrained to the reciprocal angular position of the parts to be assembled. It would however be possible, should the parts to be assembled have elements imposing a certain angular position of assembly, to realise the projection and incision as discontinuous elements. It is further evident that the incision can be realised by means of tools having different shapes and angles, so that the incision could be shaped or not perpendicular to the cap wall; in particular it might be convenient to make a downwards-inclined incision.

The described process can be used both for caps made by injection-moulding and for caps made using compression-forming. This process is in any case particularly useful in a case where the first cap-forming stage is a compression-forming stage; the compression-forming process is the process which presents the greater difficulties in realising undercuts, such as the internal annular projection 2a of the cap 2. With the described process it is possible to maintain the advantages of the compression forming while eliminating the disadvantages, in particular the danger of detachment of the parts making up the closure, which danger the compression-forming process presents, due to the difficulty of making very pronounced undercut parts.

## Claims

1. A process for making closures (1) made of plastic, comprising: a first forming stage for realising a cap (2), which cap (2) is destined to enable opening and re-closing of a container to which the cap (2) will be applied, which cap (2) is provided with an internal annular projection (2a) arranged in proximity of an open lower zone of the cap (2); a second stage of forming to make an annular element (3), provided with a security element (4), connected to the annular element (3) by easy-break zones, and further provided with an external annular projection (3a) for inserting, during an assembly stage of the cap (2) with the annular element (3), over the internal annular projection of the cap (2); after the first forming stage and before the assembly stage of the cap (2) with the annular element (3), a stage of mechanical working is performed on the cap (2), for making, on an internal wall of the cap (2) and in proximity of a lower zone thereof, an annular incision (2b) which does not pass entirely through the cap (2) and which, during the assembly stage of the cap (2) with the annular element (3), receives at least a part of the external annular projection (3a) of the annular element (3), the mechanical working stage comprising a stage of cutting performed by one or more blades having shaped cutting edges; **characterised in that** the stage of mechanical working is performed after heating the cap (2).

2. The process of claim 1, wherein the stage of mechanical working is performed in such a way that a zone of the cap (2) in which the incision (2b) is made maintains a resistance to breakage which is higher than a resistance to breakage of all of the easy-break zones which connect the security element (4) to the annular element (3).

3. The process of claim 1, wherein the cutting stage is performed by insertion of one or more blades into the cap (2) wall, entering the cap (2) from the open end thereof and cutting in a direction which is a radial direction of the cap (2).

4. The process of claim 1, wherein it comprises a stage of aspiration of portions of cap (2) which become detached from the cap (2) during the mechanical working stage.

5. The process of claim 1, wherein the first forming stage is a stage comprising compression forming.

6. The process of claim 1, wherein during the stage of mechanical working at least the lower part of the cap (2) is closed between a pair of jaws which are heated to a temperature comprised between 40°C and 60°C.

## Patentansprüche

1. Verfahren zur Herstellung von Verschlüssen (1) aus Kunststoff, umfassend: eine erste Formungsphase zur Fertigung eines Deckels (2), deren Deckel (2) dazu bestimmt ist, das Öffnen und den Wiederverschluss eines Behälters, auf dem der Deckel (2) angebracht wird, zu ermöglichen, deren Deckel (2) mit einem inneren ringförmigen Vorsprung (2a) versehen ist, der in der Nähe eines offenen unteren Bereiches des Deckels (2) angeordnet ist; eine zweite Phase der Formung, um ein ringförmiges Element (3) herzustellen, das mit einem Sicherheitselement (4) versehen ist, das mit dem ringförmigen Element (3) durch einfach zu brechende Bereiche verbunden ist, und ferner mit einem äußeren, ringförmigen Vorsprung (3a) zum Einsetzen, während einer Phase des Zusammenfügens des Deckels (2) mit dem ringförmigen Element (3), über den inneren ringförmigen Vorsprung des Deckels (2) versehen ist; nach der ersten Formungsphase und vor der Phase des Zusammenfügens des Deckels (2) mit dem ringförmigen Element (3) eine Phase der mechanischen Bearbeitung, die mit dem Deckel (2) ausgeführt wird, zur Herstellung einer Innenwand des Deckels (2) und, in der Nähe eines unteren Bereiches davon, einer ringförmigen Einkerbung (2b), die nicht vollständig durch den Deckel (2) hindurchgeht, und die, während der Phase des Zusammenfügens des Deckels (2) mit dem ringförmigen Element (3), zumindest einen Teil des äußeren ringförmigen Vorsprungs (3a) des ringförmigen Elements (3) aufnimmt, wobei die mechanische Bearbeitungsphase eine Phase des Schneidens umfasst, die durch eine oder mehrere Klingen, aufweisend geformte Schneidkanten, ausgeführt wird; **dadurch gekennzeichnet, dass** die Phase der mechanischen Bearbeitung nach dem Erhitzen des Deckels (2) ausgeführt wird.

2. Verfahren nach Anspruch 1, wobei die Phase der mechanischen Bearbeitung derart ausgeführt wird, dass ein Bereich des Deckels (2), in dem die Einkerbung (2b) hergestellt ist, eine Bruchfestigkeit bewahrt, die höher als eine Bruchfestigkeit aller einfach zu brechenden Bereiche ist, die das Sicherheitselement (4) mit dem ringförmigen Element (3) verbinden.

3. Verfahren nach Anspruch 1, wobei die Schneidephase durch das Einsetzen einer oder mehrerer Klingen in die Wand des Deckels (2), das Eintreten in den Deckel (2) vom seinem offenen Ende und das Schneiden in einer Richtung, die eine radiale Richtung des Deckels (2) ist, ausgeführt wird.

4. Verfahren nach Anspruch 1, wobei es eine Phase des Ansaugens von Abschnitten des Deckels (2) umfasst, die vom Deckel (2) während der mechanischen Bearbeitungsphase losgelöst werden.

5. Verfahren nach Anspruch 1, wobei die erste Formungsphase eine Phase ist, die Druckumformung umfasst.

6. Verfahren nach Anspruch 1, wobei während der mechanischen Bearbeitungsphase zumindest der untere Teil des Deckels (2) zwischen einem Paar Klemmbacken eingeschlossen ist, das auf eine Temperatur zwischen 40 °C und 60 °C erhitzt wird.

## Revendications

1. Procédé de fabrication de capuchons (1) en plastique, comprenant : une première étape de formage pour réaliser un capuchon (2), dont le capuchon (2) est destiné à permettre l'ouverture et la refermeture d'un contenant, sur lequel sera appliqué le capuchon (2), dont le capuchon (2) présente une saillie annulaire interne (2a) disposée à proximité d'une zone inférieure ouverte du capuchon (2) ; une deuxième étape de formage pour fabriquer un élément annulaire (3), équipé d'un élément de sécurité (4), raccordé à l'élément annulaire (3) par des zones faciles à casser, et présentant aussi une saillie annulaire externe (3a) à introduire, pendant une étape d'assemblage du capuchon (2) avec l'élément annulaire (3), sur la saillie annulaire interne du capuchon (2) ; après la première étape de formage et avant l'étape d'assemblage du capuchon (2) avec l'élément annulaire (3), une étape d'usinage mécanique est réalisée sur le capuchon (2) pour fabriquer, sur une paroi interne du capuchon (2) et à proximité d'une zone inférieure, une incision annulaire (2b) qui ne traverse pas entièrement le capuchon (2) et qui, pendant l'étape d'assemblage du capuchon (2) avec l'élément annulaire (3), reçoit au moins une partie de la saillie annulaire externe (3a) de l'élément annulaire (3), l'étape d'usinage mécanique comprenant une étape de découpage réalisée par une ou plusieurs lames ayant des arêtes de coupe façonnées ; **caractérisé en ce que** l'étape d'usinage mécanique est faite après chauffage du capuchon (2).

2. Procédé selon la revendication 1, **caractérisé en ce que** l'étape d'usinage mécanique est réalisée de sorte qu'une zone du capuchon (2), dans laquelle l'incision (2b) est faite, garde une résistance à la rupture supérieure à une résistance à la rupture de toutes les zones faciles à casser, qui raccordent l'élément de sécurité (4) à l'élément annulaire (3).

3. Procédé selon la revendication 1, **caractérisé en ce que** l'étape de découpage est réalisée par introduction d'une ou plusieurs lames dans la paroi du capuchon (2), entrant dans le capuchon (2) depuis son extrémité ouverte et coupant dans une direction, qui est une direction radiale du capuchon (2).

4. Procédé selon la revendication 1, **caractérisé en ce qu'**il comprend une étape d'aspiration des parties du capuchon (2) qui se détachent du capuchon (2), pendant l'étape d'usinage mécanique.

5. Procédé selon la revendication 1, **caractérisé en ce que** la première étape de formage est une étape comprenant un formage par compression.

6. Procédé selon la revendication 1, **caractérisé en ce que**, pendant l'étape d'usinage mécanique, au moins la partie inférieure du capuchon (2) est serrée entre une paire de mâchoires, qui sont chauffées à une température comprise entre 40°C et 60°C.
